# EUROPÄISCHE PATENTSCHRIFT

(11) **EP 3 736 542 B1**
(45) Veröffentlichungstag und Bekanntmachung des Hinweises auf die Patenterteilung: **07.07.2021**
(21) Anmeldenummer: 19173237.9
(22) Anmeldetag: 08.05.2019
(51) Int. Cl.: G01D 5/347, G01D 5/244

(54) **ANORDNUNG ZUM ENDSEITIGEN BEFESTIGEN EINES SICH IN EINER LÄNGSRICHTUNG ERSTRECKENDEN TRÄGERS MIT EINER MESSTEILUNG ZUR POSITIONSMESSUNG ZUMINDEST IN LÄNGSRICHTUNG AN EINER ANBAUFLÄCHE EINES GRUNDKÖRPERS**
ASSEMBLY FOR FIXING AN END OF A SUPPORT EXTENDING IN A LONGITUDINAL DIRECTION WITH A MEASUREMENT POINT FOR POSITION MEASUREMENT AT LEAST IN A LONGITUDINAL DIRECTION ON AN ATTACHMENT FACE OF A CARRIER
DISPOSITIF DE FIXATION CÔTÉ EXTRÉMITÉ D'UN SUPPORT S'ÉTENDANT DANS UNE DIRECTION LONGITUDINALE DOTÉ D'UNE GRADUATION DE MESURE DESTINÉE À MESURER LA POSITION AU MOINS DANS UNE DIRECTION LONGITUDINALE SUR UNE SURFACE DE MONTAGE D'UN CORPS DE BASE

(43) Veröffentlichungstag der Anmeldung: 11.11.2020
(73) Patentinhaber: Dr. Johannes Heidenhain GmbH, 83301 Traunreut (DE)
(72) Erfinder: MAYER, Reinhard, 83278 Traunstein (DE); MITTERLEITNER, Josef, 83339 Chieming (DE); PUCHER, Wolfgang, 83278 Traunstein (DE)

(56) Entgegenhaltungen:
- DE-A1- 3 509 390
- DE-A1- 10 255 456
- DE-A1-102015 226 298

## Beschreibung

Anordnung zum endseitigen Befestigen eines sich in einer Längsrichtung erstreckenden Trägers mit einer Messteilung zur Positionsmessung zumindest in Längsrichtung an einer Anbaufläche eines Grundkörpers

### GEBIET DER TECHNIK

Die vorliegende Erfindung betrifft eine Anordnung zum endseitigen Befestigen eines sich in einer Längsrichtung erstreckenden Trägers mit einer Messteilung zur Positionsmessung zumindest in Längsrichtung an einer Anbaufläche eines Grundkörpers nach dem Oberbegriff des Anspruchs 1.

### STAND DER TECHNIK

Positionsmesseinrichtungen dienen zur Bestimmung der Position zweier zueinander bewegbarer Bauteile. Sie werden bei Bearbeitungsmaschinen zur Messung der Relativbewegung eines Werkzeugs bezüglich eines zu bearbeitenden Werkstücks, bei Koordinatenmessmaschinen und vermehrt auch in der Halbleiterindustrie zur Positionierung und Bearbeitung von Wafern eingesetzt.

Positionsmesseinrichtungen bestehen aus einer Maßverkörperung und einer die Maßverkörperung abtastenden Abtasteinheit. Die Anforderungen an Positionsmesseinrichtungen werden immer höher. Es wird laufend eine höhere Auflösung sowie eine höhere Genauigkeit und Reproduzierbarkeit der Positionsmessung gefordert. Zur Bildung eines Fixpunktes der Maßverkörperung gegenüber dem Grundkörper (z.B. Bett einer Maschine) ist es bekannt, diese an einer Stelle gegenüber dem Grundkörper in Messrichtung ortsfest zu fixieren.

In den meisten Fällen bestehen die Maßverkörperung und der Grundkörper aus Materialien mit unterschiedlichen thermischen Ausdehnungsverhalten. Die ortsfeste Fixierung sollte derart ausgestaltet werden, dass bei Temperaturänderungen keine Zwangskräfte vom Grundkörper auf die Maßverkörperung ausgeübt werden.

Eine gattungsgemäße Anordnung ist aus DE 35 09 390 A1 bekannt. DE 35 09 390 A1 offenbart eine gekapselte Längenmesseinrichtung, insbesondere Mittel zur Befestigung des Messsystems an Maschinen. Die Messeinrichtung umfasst eine Messteilung und eine Abtastbaueinheit, die in einem langgestreckten, an den Stirnseiten durch Abschlussdeckel verschlossenen Hohlkörper angeordnet sind. Die Abschlussdeckel sind über ein elastisches Zwischenstück mit jeweils einem Befestigungsblock verbunden, wobei an drei orthogonalen Flächen eines jeden Befestigungsblocks Mittel zur Befestigung an der Maschine vorgesehen sind. Der Hohlkörper besitzt an drei orthogonalen Längsflächen Nuten zur Aufnahme von elastisch wirkenden Befestigungsmitteln.

### ZUSAMMENFASSUNG DER ERFINDUNG

Der vorliegenden Erfindung liegt die Aufgabe zugrunde, eine Anordnung zum endseitigen Befestigen eines sich in einer Längsrichtung erstreckenden Trägers mit einer Messteilung zur Positionsmessung zumindest in Längsrichtung an einer Anbaufläche eines Grundkörpers anzugeben, die robust aufgebaut ist und mit der eine präzise Positionsmessung ermöglicht wird.

Diese Aufgabe wird erfindungsgemäß durch eine Anordnung mit den Merkmalen des Anspruchs 1 gelöst.

Die erfindungsgemäß ausgebildete Anordnung dient zum endseitigen Befestigen eines sich in einer Längsrichtung erstreckenden Trägers mit einer Messteilung zur Positionsmessung zumindest in Längsrichtung an einer Anbaufläche eines Grundkörpers. Die Anordnung weist ein erstes Befestigungselement und ein zweites Befestigungselement auf. Das erste Befestigungselement und das zweite Befestigungselement sind auf in Längsrichtung gegenüberliegenden Seiten des Trägers positionierbar. Das erste Befestigungselement und das zweite Befestigungselement sind derart ausgebildet, dass der Träger an seinen Enden von dem ersten Befestigungselement und dem zweiten Befestigungselement seitlich kontaktierbar ist. Das erste Befestigungselement ist derart ausgebildet, dass der Träger an seinem dem ersten Befestigungselement zugewandten Ende in Längsrichtung starr gegenüber dem Grundkörper getragen werden kann. Das zweite Befestigungselement ist derart ausgebildet, dass der Träger an seinem dem zweiten Befestigungselement zugewandten Ende in Längsrichtung frei beweglich gegenüber dem Grundkörper getragen werden kann. Das erste Befestigungselement weist einen ersten Hauptabschnitt, der mit dem Grundkörper starr verbindbar ist, und eine erste Gruppe von Teilabschnitten, die mit dem Träger starr verbindbar sind, auf. Der erste Hauptabschnitt erstreckt sich zumindest teilweise in einer ersten Ebene quer zur Längsrichtung. Die Teilabschnitte der ersten Gruppe sind entlang eines in der ersten Ebene liegenden kreisförmigen Umfangs um einen ersten Mittelpunkt herum verteilt angeordnet. Zwischen dem ersten Hauptabschnitt und den Teilabschnitten der ersten Gruppe sind jeweils erste Verbindungsabschnitte angeordnet. Die ersten Verbindungsabschnitte sind derart ausgebildet, dass sie eine Bewegung zwischen dem ersten Hauptabschnitt und den Teilabschnitten der ersten Gruppe in einer radialen Richtung bezogen auf den ersten Mittelpunkt zulassen, aber keine Bewegung zwischen dem ersten Hauptabschnitt und den Teilabschnitten der ersten Gruppe in einer Umfangsrichtung bezogen auf den ersten Mittelpunkt zulassen. Das zweite Befestigungselement weist einen zweiten Hauptabschnitt, der mit dem Grundkörper starr verbindbar ist, und eine zweite Gruppe von Teilabschnitten, die mit dem Träger starr verbindbar sind, auf. Der zweite Hauptabschnitt erstreckt sich zumindest teilweise in einer zweiten Ebene quer zur Längsrichtung. Die Teilabschnitte der zweiten Gruppe sind entlang eines in der zweiten Ebene liegenden kreisförmigen Umfangs um einen zweiten Mittelpunkt herum verteilt angeordnet. Zwischen dem zweiten Hauptabschnitt und den Teilabschnitten der zweiten Gruppe sind jeweils zwei Verbindungsabschnitte angeordnet. Die zweiten Verbindungsabschnitte sind derart ausgebildet, dass sie eine Bewegung zwischen dem zweiten Hauptabschnitt und den Teilabschnitten der zweiten Gruppe in radialer Richtung bezogen auf den zweiten Mittelpunkt zulassen, aber keine Bewegung zwischen dem zweiten Hauptabschnitt und den Teilabschnitten der zweiten Gruppe in Umfangsrichtung bezogen auf den zweiten Mittelpunkt zulassen.

Vorzugsweise dient die Anordnung zum endseitigen Befestigen eines balkenförmigen Trägers einer Mehrzahl von Maßstäben an der Anbaufläche des Grundkörpers. Die Maßstäbe erstrecken sich jeweils in Längsrichtung. Die Maßstäbe weisen jeweils eine Messteilung zur Positionsmessung zumindest in Längsrichtung auf.

Vorzugsweise ist der in der ersten Ebene liegende kreisförmige Umfang in Bezug auf den ersten Mittelpunkt definiert, und der in der zweiten Ebene liegende kreisförmige Umfang ist in Bezug auf den zweiten Mittelpunkt definiert.

Vorzugsweise entspricht die Längsrichtung einer (Haupt-)Messrichtung. Die radiale Richtung entspricht einer Richtung, die orthogonal zur Längsrichtung verläuft und in Bezug auf den ersten Mittelpunkt bzw. in Bezug auf den zweiten Mittelpunkt definiert ist. Die Umfangsrichtung entspricht einer tangentialen Richtung, die orthogonal zur radialen Richtung verläuft und in Bezug auf den ersten Mittelpunkt bzw. in Bezug auf den zweiten Mittelpunkt definiert ist, d.h. in der ersten Ebene bzw. in der zweiten Ebene liegt.

Vorzugsweise ist das erste Befestigungselement als Festlager ausgebildet. Das zweite Befestigungselement ist vorzugsweise als Loslager ausgebildet.

Es ist vorteilhaft, wenn ein Abstand in radialer Richtung zwischen den Teilabschnitten der ersten Gruppe und dem ersten Mittelpunkt und ein Abstand in radialer Richtung zwischen den Teilabschnitten der zweiten Gruppe und dem zweiten Mittelpunkt derart gewählt werden, dass eine vorgegebene Torsionssteifigkeit der Anordnung erreicht wird.

Durch die Erfindung werden mit einer robust aufgebauten Anordnung zum einen eine (lokale) ortsfeste Fixierung der Maßverkörperung gegenüber dem Grundkörper und zum anderen eine Entkopplung der Maßverkörperung vom Grundkörper zumindest in Längsrichtung (Messrichtung) sowie jeweils stirnseitig in radialer Richtung ermöglicht. Durch die Entkopplung wird erreicht, dass auch bei Temperaturänderungen keine Zwangskräfte vom Grundkörper auf die Maßverkörperung ausgeübt werden. Insbesondere können unterschiedliche thermische Ausdehnungsverhalten zwischen der Maßverkörperung, d.h. Träger mit einer Messteilung, und dem jeweiligen Befestigungselement, d.h. Festlager bzw. Loslager, in der Ebene quer zur Längsrichtung ausgeglichen werden. Die Erfindung ermöglicht zudem eine Erhöhung der Torsionssteifigkeit und Eigenfrequenzen der Anordnung. Dadurch wird der robuste Aufbau der Anordnung erreicht.

Eine Baueinheit mit einer erfindungsgemäßen Anordnung und einem Träger, wobei der Träger eine Messteilung zur Positionsmessung zumindest in Längsrichtung aufweist, ist im Anspruch 15 angegeben.

Der Träger besteht insbesondere aus einem Material mit einem thermischen Ausdehnungskoeffizienten im Temperaturbereich von 0° bis 50° kleiner als 1,5 x 10⁻⁶ K⁻¹, vorzugweise kleiner als 0,1 x 10⁻⁶ K⁻¹.

Vorteilhafte Ausbildungen der Erfindung entnimmt man den abhängigen Ansprüchen.

### KURZE BESCHREIBUNG DER ZEICHNUNGEN

Einzelheiten und Vorteile der erfindungsgemäßen Anordnung ergeben sich aus der nachfolgenden Beschreibung eines Ausführungsbeispiels anhand der beiliegenden Figuren.

Es zeigen
- Fig. 1: eine perspektivische Ansicht einer erfindungsgemäß ausgebildeten Anordnung mit einem jeweils endseitig eines balkenförmigen Trägers angeordneten ersten und zweiten Befestigungselement;
- Fig. 2: eine perspektivische Ansicht des ersten Befestigungselements;
- Fig. 3: eine perspektivische Ansicht des zweiten Befestigungselements;
- Fig. 4: eine perspektivische Ansicht des ersten Befestigungselements mit einer sich in Längsrichtung erstreckenden Schnittebene zur Veranschaulichung eines innerhalb einer Ausnehmung in Längsrichtung frei bewegbaren Teilabschnitts des ersten Befestigungselements;
- Fig. 5: eine perspektivische Ansicht des ersten Befestigungselements mit einer sich in Längsrichtung erstreckenden Schnittebene zur Veranschaulichung eines innerhalb einer Ausnehmung um einen Drehpunkt zumindest um eine parallel zur Querrichtung bzw. parallel zur Höhenrichtung verlaufende Drehachse frei drehbaren weiteren Teilabschnitts des ersten Befestigungselements;
- Fig. 6: eine perspektivische Ansicht des zweiten Befestigungselements mit einer sich in Längsrichtung erstreckenden Schnittebene zur Veranschaulichung eines innerhalb einer Ausnehmung in Längsrichtung frei bewegbaren Teilabschnitts des zweiten Befestigungselements;
- Fig. 7: eine schematische Darstellung zur Veranschaulichung einer beispielhaften Relativanordnung zwischen einer Gruppe von Teilabschnitten des ersten Befestigungselements und dem balkenförmigen Träger;
- Fig. 8: eine schematische Darstellung zur Veranschaulichung einer beispielhaften Relativanordnung zwischen einer Gruppe von Teilabschnitten des zweiten Befestigungselements und dem balkenförmigen Träger;
- Fig. 9: eine schematische Darstellung zur Veranschaulichung einer weiteren beispielhaften Relativanordnung zwischen der Gruppe von Teilabschnitten des ersten Befestigungselements und dem balkenförmigen Träger; und
- Fig. 10: eine schematische Darstellung zur Veranschaulichung einer weiteren beispielhaften Relativanordnung zwischen der Gruppe von Teilabschnitten des zweiten Befestigungselements und dem balkenförmigen Träger.

### BESCHREIBUNG DER AUSFÜHRUNGSFORMEN

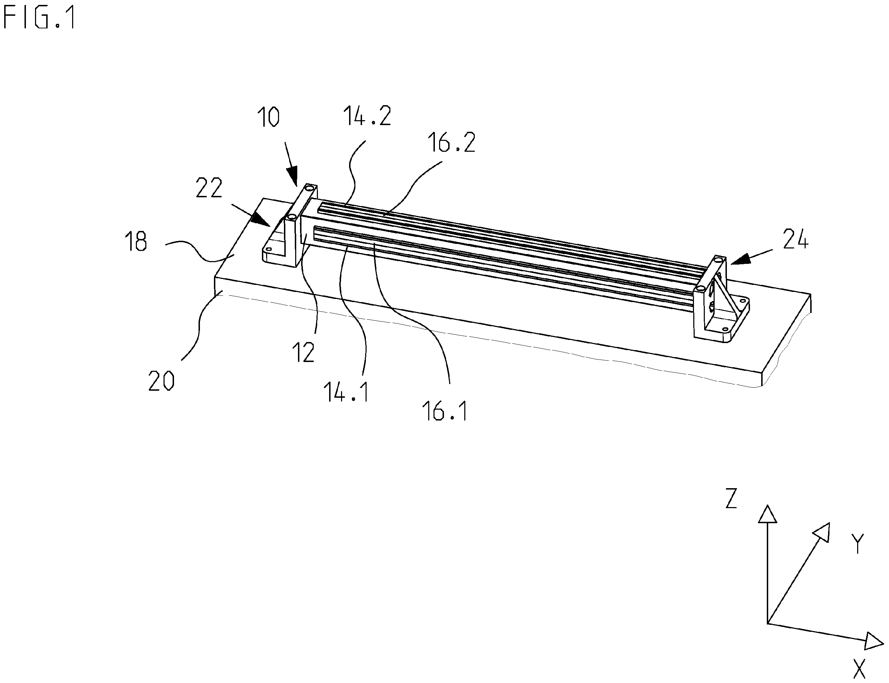

Eine Ausführungsform der Erfindung wird nachfolgend anhand der Figuren 1 bis 6 erläutert. Die erfindungsgemäß ausgebildete Anordnung 10 ist in Figur 1 gezeigt. Die Anordnung 10 dient zum endseitigen Befestigen eines balkenförmigen Trägers 12 einer Mehrzahl von Maßstäben (im Folgenden Maßstäbe 14, wobei in Figur 1 nur zwei Maßstäbe 14.1, 14.2 sichtbar sind) an einer Anbaufläche 18 eines Grundkörpers 20. Die Maßstäbe 14 erstrecken sich jeweils in einer Längsrichtung X. Die Maßstäbe 14 weisen jeweils eine Messteilung (im Folgenden Messteilungen 16, wobei in Figur 1 nur zwei Messteilungen 16.1, 16.2 sichtbar sind) auf. Jede der Messteilungen 16 ist als lichtelektrisch abtastbare Inkrementalteilung zur hochgenauen Positionsmessung zumindest in Längsrichtung X ausgebildet. Der balkenförmige Träger 12 erstreckt sich in Längsrichtung X und besteht vorzugsweise aus einem Material mit einem vernachlässigbar kleinen thermischen Ausdehnungskoeffizienten, insbesondere mit einem thermischen Ausdehnungskoeffizienten α im Temperaturbereich von 0° bis 50° kleiner als 1,5 x 10⁻⁶ K⁻¹, insbesondere aber kleiner als 0,1 x 10⁻⁶K⁻¹. Derartige Materialien sind Glas bzw. Glaskeramik (z.B. Zerodur) oder Metalle wie z.B. Invar. Der Grundkörper 20 besteht beispielsweise aus Stahl.

Die Maßstäbe 14 sind auf je einer der Längsseiten des balkenförmigen Trägers 12, d.h. auf zwei in einer Querrichtung Y bzw. auf zwei in einer Höhenrichtung Z gegenüberliegenden Seiten des balkenförmigen Trägers 12, angeordnet. Die Maßstäbe 14 dienen jeweils als Zwischenträger einer dem jeweiligen Maßstab 14 zugeordneten Messteilung 16. Die Maßstäbe 14 können auf die Oberflächen des balkenförmigen Trägers 12 aufgeklebt sein.

Alternativ können die Maßstäbe 14 auch weggelassen werden. In diesem Fall sind die Messteilungen 16 unmittelbar (d.h. ohne Zwischenträger) auf den Längsseiten des balkenförmigen Trägers 12 angeordnet bzw. in denselben integriert. Die Messteilungen 16 werden beispielsweise durch Laserbearbeitung in den Oberflächen des balkenförmigen Trägers 12 gebildet.

Die Anordnung 10 und der balkenförmige Träger 12 bilden eine Baueinheit. Die Messteilungen 16 der Maßstäbe 14 sind durch eine in Figur 1 nicht gezeigte, den balkenförmigen Träger 12 umgreifende Abtasteinheit abtastbar.

Die Anordnung 10 weist ein als Festlager ausgebildetes erstes Befestigungselement 22 und ein als Loslager ausgebildetes zweites Befestigungselement 24 auf. Das erste Befestigungselement 22 und das zweite Befestigungselement 24 sind auf in Längsrichtung X gegenüberliegenden Seiten des balkenförmigen Trägers 12 angeordnet. Das erste Befestigungselement 22 und das zweite Befestigungselement 24 sind derart ausgebildet, dass der balkenförmige Träger 12 an seinen Enden von dem ersten Befestigungselement 22 und dem zweiten Befestigungselement 24 seitlich kontaktierbar ist. Das erste Befestigungselement 22 und das zweite Befestigungselement 24 haben einen von dem balkenförmigen Träger 12 verschiedenen thermischen Ausdehnungskoeffizienten. Beispielsweise bestehen das erste Befestigungselement 22 und das zweite Befestigungselement 24 aus Stahl.

Das erste Befestigungselement 22 ist derart ausgebildet, dass der balkenförmige Träger 12 an seinem dem ersten Befestigungselement 22 zugewandten Ende in Längsrichtung X starr gegenüber dem Grundkörper 20 getragen werden kann. Das zweite Befestigungselement 24 ist derart ausgebildet, dass der balkenförmige Träger 12 an seinem dem zweiten Befestigungselement 24 zugewandten Ende in Längsrichtung X frei beweglich gegenüber dem Grundkörper 20 getragen werden kann. Wie in Fig. 1 gezeigt, sind das erste Befestigungselement 22 und das zweite Befestigungselement 24 an der Anbaufläche 18 des Grundkörpers 20 befestigbar.

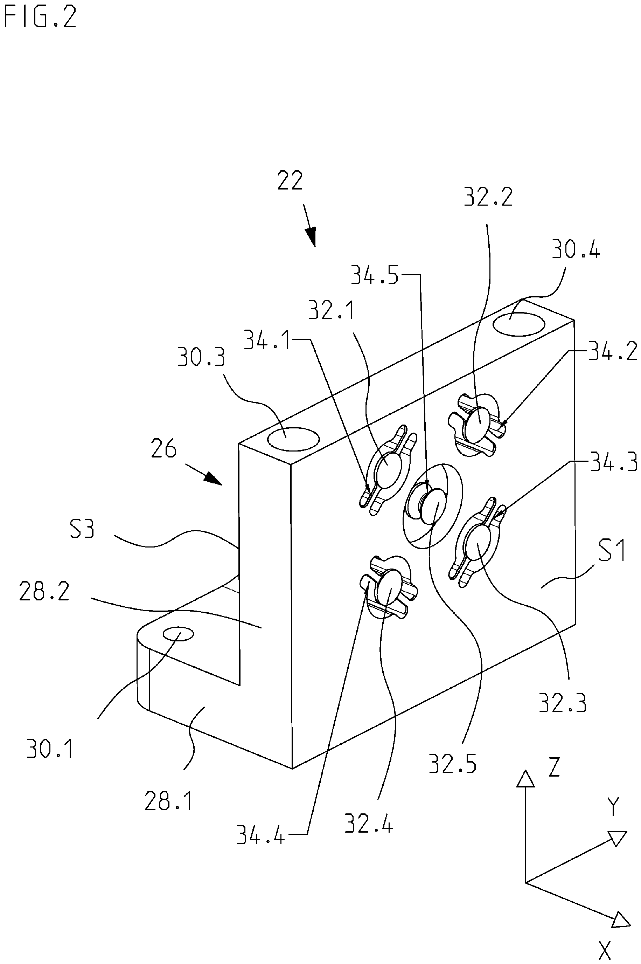

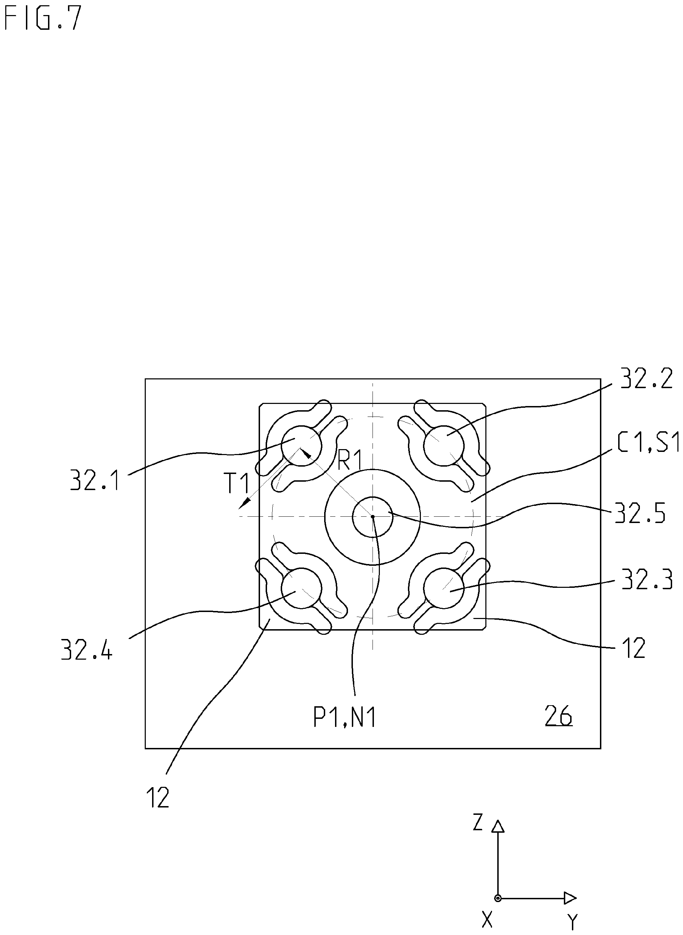

Nähere Einzelheiten des ersten und zweiten Befestigungselements 22, 24 werden anhand der Figuren 2 bis 6 (in Verbindung mit den Figuren 7 bis 10) erläutert.

Figur 2 zeigt eine perspektivische Ansicht des ersten Befestigungselements 22. Das erste Befestigungselement 22 weist einen winkelförmig ausgebildeten ersten Hauptabschnitt 26, der mit dem Grundkörper 20 starr verbindbar ist, und eine erste Gruppe von Teilabschnitten 32.1 bis 32.4, die mit dem balkenförmigen Träger 12 starr verbindbar sind, auf. Der erste Hauptabschnitt 26 erstreckt sich zumindest teilweise in einer ersten Ebene S1 quer zur Längsrichtung X. Die Teilabschnitte 32.1 bis 32.4 der ersten Gruppe sind entlang eines in der ersten Ebene S1 liegenden kreisförmigen Umfangs C1 um einen ersten Mittelpunkt P1 herum verteilt angeordnet (vgl. die Figuren 2 und 7 bzw. 9).

In Bezug auf Figur 2 und 7 bzw. 9 sind zwischen dem ersten Hauptabschnitt 26 und den Teilabschnitten 32.1 bis 32.4 der ersten Gruppe jeweils erste Verbindungsabschnitte 34.1 bis 34.4. angeordnet. Die ersten Verbindungsabschnitte 34.1 bis 34.4 sind derart ausgebildet, dass sie eine Bewegung zwischen dem ersten Hauptabschnitt 26 und den Teilabschnitten 32.1 bis 32.4 der ersten Gruppe in einer radialen Richtung R1 bezogen auf den ersten Mittelpunkt P1 zulassen, aber keine Bewegung zwischen dem ersten Hauptabschnitt 26 und den Teilabschnitten 32.1 bis 32.4 der ersten Gruppe in einer Umfangsrichtung T1 bezogen auf den ersten Mittelpunkt P1 zulassen.

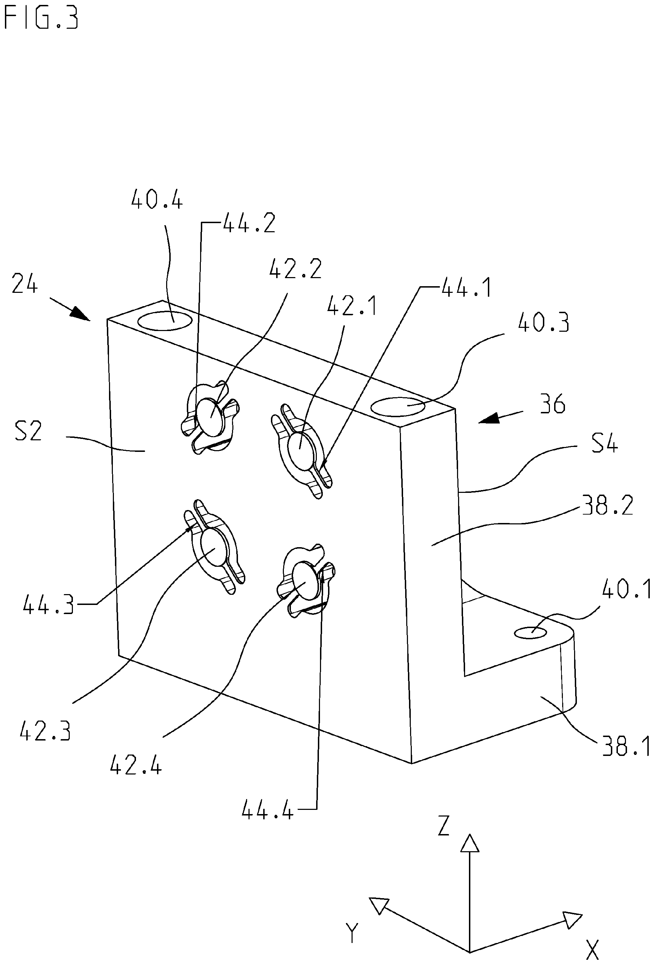

Figur 3 zeigt eine perspektivische Ansicht des zweiten Befestigungselements 24. Das zweite Befestigungselement 24 weist einen winkelförmig ausgebildeten zweiten Hauptabschnitt 36, der mit dem Grundkörper 20 starr verbindbar ist, und eine zweite Gruppe von Teilabschnitten 42.1 bis 42.4, die mit dem balkenförmigen Träger 12 starr verbindbar sind, auf. Der zweite Hauptabschnitt 36 erstreckt sich zumindest teilweise in einer zweiten Ebene S2 quer zur Längsrichtung X. Die Teilabschnitte 42.1 bis 42.4 der zweiten Gruppe sind entlang eines in der zweiten Ebene S2 liegenden kreisförmigen Umfangs C2 um einen zweiten Mittelpunkt P2 herum verteilt angeordnet (vgl. die Figuren 3 und 8 bzw. 10).

In Bezug auf Figur 3 und 8 bzw. 10 sind zwischen dem zweiten Hauptabschnitt 36 und den Teilabschnitten 42.1 bis 42.4 der zweiten Gruppe jeweils zweite Verbindungsabschnitte 44.1 bis 44.4 angeordnet. Die zweiten Verbindungsabschnitte 44.1 bis 44.4 sind derart ausgebildet, dass sie eine Bewegung zwischen dem zweiten Hauptabschnitt 36 und den Teilabschnitten 42.1 bis 42.4 der zweiten Gruppe in radialer Richtung R2 bezogen auf den zweiten Mittelpunkt P2 zulassen, aber keine Bewegung zwischen dem zweiten Hauptabschnitt 36 und den Teilabschnitten 42.1 bis 42.4 der zweiten Gruppe in Umfangsrichtung T2 bezogen auf den zweiten Mittelpunkt P2 zulassen.

Es ist vorteilhaft, wenn sich der erste und zweite Mittelpunkt P1, P2 in Längsrichtung X einander gegenüberliegen (d.h. der erste und zweite Mittelpunkt P1, P2 liegen auf einer Längsachse). Dadurch wird eine spiegelsymmetrische Anordnung erreicht, insbesondere dahingehend, dass sich die Teilabschnitte 32.1 bis 32.4, 42.1 bis 42.4 der ersten und zweiten Gruppe jeweils in Längsrichtung X einander gegenüberliegen. Dies ist insbesondere dann der Fall, wenn ein Abstand in radialer Richtung R1 zwischen den Teilabschnitten 32.1 bis 32.4 der ersten Gruppe und dem ersten Mittelpunkt P1 und ein Abstand in radialer Richtung R2 zwischen den Teilabschnitten 42.1 bis 42.4 der zweiten Gruppe und dem zweiten Mittelpunkt P2 gleich groß gewählt werden.

Durch die ersten und zweiten Verbindungsabschnitte 34.1 bis 34.4, 44.1 bis 44.4 wird eine Entkopplung des balkenförmigen Trägers 12 an seinen Enden bewirkt, d.h. es erfolgt ein Ausgleich von durch die verschiedenen thermischen Ausdehnungskoeffizienten bedingten Relativausdehnungen zwischen dem balkenförmigen Träger 12 und dem jeweiligen als Festlager bzw. Loslager ausgebildeten Befestigungselement 22, 24. Die Entkopplung bzw. der Ausgleich der Relativausdehnungen erfolgt dabei in radialer Richtung R1, R2 in der ersten bzw. zweiten Ebene S1, S2 (d.h. in der YZ-Ebene) jeweils ausgehend vom ersten bzw. zweiten Mittelpunkt P1, P2. Gleichzeitig wird durch die ersten und zweiten Verbindungsabschnitte 34.1 bis 34.4, 44.1 bis 44.4 ein jeweils endseitiges Sperren von Relativbewegungen zwischen dem balkenförmigen Träger 12 und dem jeweiligen Befestigungselement 22, 24 in Umfangsrichtung T1, T2 bewirkt. Dadurch ergibt sich eine Erhöhung der Torsionssteifigkeit und Eigenfrequenzen der Anordnung 10.

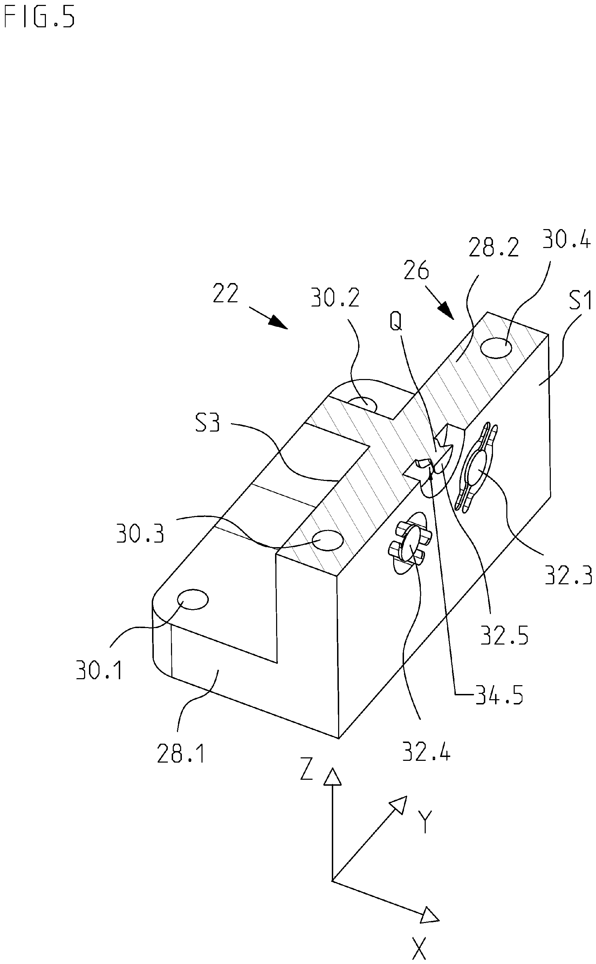

Der erste Hauptabschnitt 26 weist einen Befestigungsabschnitt 28.1 und einen quaderförmigen Abschnitt 28.2 auf. Der Befestigungsabschnitt 28.1 umfasst ein Paar von Ausnehmungen 30.1, 30.2 (vgl. insbesondere Figur 2 und 5). Der quaderförmige Abschnitt 28.2 erstreckt sich von der ersten Ebene S1 zu einer der ersten Ebene S1 parallel gegenüberliegenden dritten Ebene S3 in Längsrichtung X. Der quaderförmige Abschnitt 28.2 umfasst ein weiteres Paar von Ausnehmungen 30.3, 30.4. Die Ausnehmungen 30.1 bis 30.4 dienen zur Aufnahme von Befestigungsschrauben. Durch die Befestigungsschrauben kann das erste Befestigungselement 22 an dem Grundkörper 20 befestigt werden.

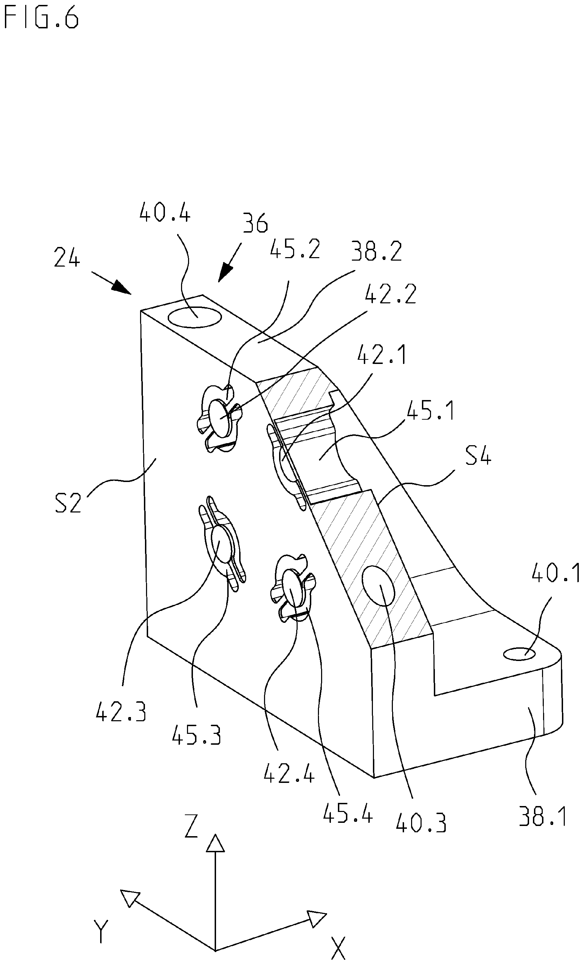

Der zweite Hauptabschnitt 36 weist einen Befestigungsabschnitt 38.1 und einen quaderförmigen Abschnitt 38.2 auf. Der Befestigungsabschnitt 38.1 umfasst ein Paar von Ausnehmungen (wobei in Figur 3 und 6 jeweils nur eine Ausnehmung 40.1 sichtbar ist). Der quaderförmige Abschnitt 38.2 erstreckt sich von der zweiten Ebene S2 zu einer der zweiten Ebene S2 parallel gegenüberliegenden vierten Ebene S4 in Längsrichtung X. Der quaderförmige Abschnitt 38.2 umfasst ein weiteres Paar von Ausnehmungen 40.3, 40.4. Die Ausnehmungen 40.1 bis 40.4 dienen zur Aufnahme von Befestigungsschrauben. Durch die Befestigungsschrauben kann das zweite Befestigungselement 24 an dem Grundkörper 20 befestigt werden.

In Bezug auf Figur 2 weist das erste Befestigungselement 22 zusätzlich zu der ersten Gruppe von Teilabschnitten 32.1 bis 32.4 einen weiteren Teilabschnitt 32.5, der mit dem balkenförmigen Träger 12 starr verbindbar ist, auf. Der weitere Teilabschnitt 32.5 ist in der ersten Ebene S1 im ersten Mittelpunkt P1 angeordnet (vgl. die Figuren 2 und 7 bzw. 9). Der erste Hauptabschnitt 26 und der weitere Teilabschnitt 32.5 sind über ein Kerbgelenk 34.5 (z.B. Kugelgelenk) derart miteinander verbunden, dass eine Bewegung zwischen dem ersten Hauptabschnitt 26 und dem weiteren Teilabschnitt 32.5 in Längsrichtung X verhindert wird. Dadurch wird eine (lokale) ortsfeste Fixierung des die Maßstäbe 14 tragenden balkenförmigen Trägers 12 gegenüber dem Grundkörper 20 erreicht.

Wie in Figur 2 gezeigt, erstrecken sich die Teilabschnitte 32.1 bis 32.4 der ersten Gruppe und der weitere Teilabschnitt 32.5 parallel zur ersten Ebene S1. Die Teilabschnitte 32.1 bis 32.4 der ersten Gruppe und der weitere Teilabschnitt 32.5 sind jeweils scheibenförmig ausgebildet. Wie in Figur 3 gezeigt, erstrecken sich die Teilabschnitte 42.1 bis 42.4 der zweiten Gruppe parallel zur zweiten Ebene S2. Die Teilabschnitte 42.1 bis 42.4 der zweiten Gruppe sind jeweils scheibenförmig ausgebildet.

Gemäß Figur 2 weisen die Teilabschnitte 32.1 bis 32.4 der ersten Gruppe und der weitere Teilabschnitt 32.5 erste Oberflächen zum Aufbringen eines Klebstoffs zur stoffschlüssigen Verbindung des dem ersten Befestigungselement 22 zugewandten Endes des balkenförmigen Trägers 12 mit den Teilabschnitten 32.1 bis 32.4 der ersten Gruppe und dem weiteren Teilabschnitt 32.5 auf. Gemäß Figur 3 weisen die Teilabschnitte 42.1 bis 42.4 der zweiten Gruppe zweite Oberflächen zum Aufbringen eines Klebstoffs zur stoffschlüssigen Verbindung des dem zweiten Befestigungselement 24 zugewandten Endes des balkenförmigen Trägers 12 mit den Teilabschnitten 42.1 bis 42.4 der zweiten Gruppe auf. Der Klebstoff ist insbesondere ein steifer Strukturklebstoff. Durch die Klebeverbindungen kann auf Gewindebohrungen in dem balkenförmigen Träger 12 verzichtet werden. Dies ermöglicht einen kompakten Aufbau der Anordnung 10.

Wie in Figur 2 gezeigt, erstrecken sich die jeweils stegförmig ausgebildeten ersten Verbindungsabschnitte 34.1 bis 34.4 parallel zur ersten Ebene S1. Wie in Figur 3 gezeigt, erstrecken sich die jeweils stegförmig ausgebildeten zweiten Verbindungsabschnitte 44.1 bis 44.4 parallel zur zweiten Ebene S2. Die ersten Verbindungsabschnitte 34.1 bis 34.4 verlaufen jeweils ausgehend von den Teilabschnitten 32.1 bis 32.4 der ersten Gruppe in Umfangsrichtung T1 zum ersten Hauptabschnitt 26 hin (vgl. die Figuren 2 und 7 bzw. 9). Die zweiten Verbindungsabschnitte 44.1 bis 44.4 verlaufen jeweils ausgehend von den Teilabschnitten 42.1 bis 42.4 der zweiten Gruppe in Umfangsrichtung T2 zum zweiten Hauptabschnitt 36 hin (vgl. die Figuren 3 und 8 bzw. 10). Die ersten und zweiten Verbindungsabschnitte 34.1 bis 34.4, 44.1 bis 44.4 sind insbesondere in radialer Richtung R1, R2 auslenkbar, während sie in Umfangsrichtung T1, T2 nicht auslenkbar sind und somit eine Rotation des balkenförmigen Trägers 12 um eine parallel zur X-Achse (Längsachse) verlaufende Drehachse verhindern. D.h., der Rotationsfreiheitsgrad RX ist im Wesentlichen gesperrt.

Andererseits wird durch die ersten und zweiten Verbindungsabschnitte 34.1 bis 34.4, 44.1 bis 44.4 eine Rotation der beiden Enden des balkenförmigen Trägers 12 jeweils um eine parallel zur Y-Achse bzw. parallel zur Z-Achse verlaufende Drehachse ermöglicht. Dadurch wird eine Biegung des balkenförmigen Trägers 12 vermieden. Des Weiteren wird durch die ersten und zweiten Verbindungsabschnitte 34.1 bis 34.4, 44.1 bis 44.4 eine relativ hohe Steifigkeit in Querrichtung (Y-Richtung) bzw. Höhenrichtung (Z-Richtung) erreicht.

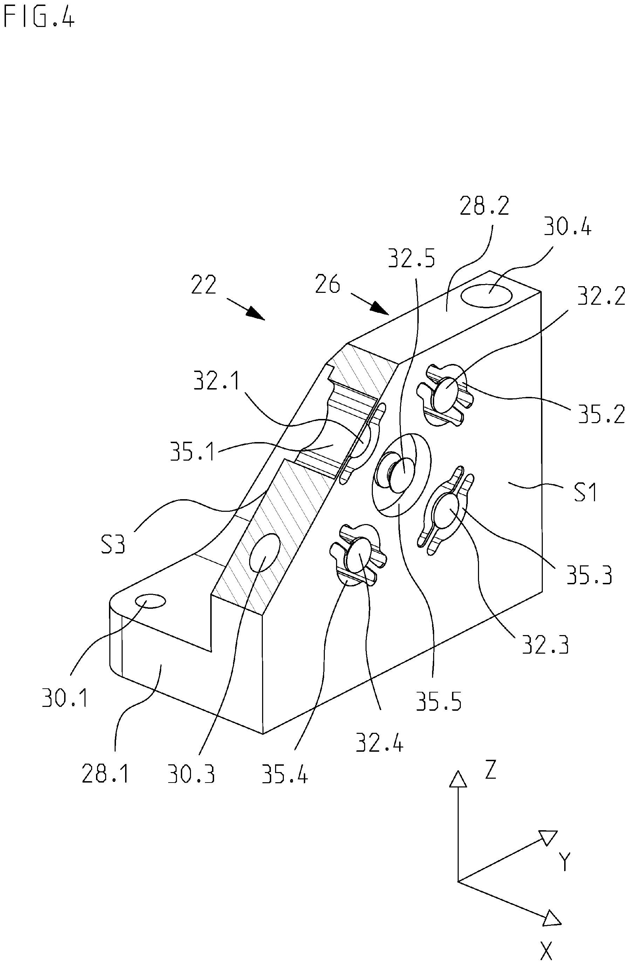

Gemäß Figur 2, 4 und 5 umfasst der erste Hauptabschnitt 26 den Teilabschnitten 32.1 bis 32.4 der ersten Gruppe zugeordnete erste Ausnehmungen 35.1 bis 35.4. Die ersten Ausnehmungen 35.1 bis 35.4 erstrecken sich in Längsrichtung X durch den ersten Hauptabschnitt 26 hindurch von der ersten Ebene S1 bis zur dritten Ebene S3. In Figur 4 ist insbesondere die dem Teilabschnitt 32.1 zugeordnete Ausnehmung 35.1 gut sichtbar. Die Teilabschnitte 32.1 bis 32.4 der ersten Gruppe sind durch eine Biegung der ersten Verbindungsabschnitte 34.1 bis 34.4 in Längsrichtung X innerhalb der ersten Ausnehmungen 35.1 bis 35.4 frei bewegbar. Dadurch wird erreicht, dass die Rotationsfreiheitsgrade RY und RZ des dem ersten Befestigungselement 22 zugewandten Endes des balkenförmigen Trägers 12 nicht gesperrt sind.

Insbesondere sind die ersten Verbindungsabschnitte 34.1 bis 34.4 derart ausgebildet, dass sie eine Bewegung zwischen dem ersten Hauptabschnitt 26 und den Teilabschnitten 32.1 bis 32.4 der ersten Gruppe in Längsrichtung X zulassen.

Der erste Hauptabschnitt 26 umfasst zudem eine dem weiteren Teilabschnitt 32.5 zugeordnete weitere Ausnehmung 35.5. Die weitere Ausnehmung 35.5 erstreckt sich in Längsrichtung X zumindest teilweise durch den ersten Hauptabschnitt 26 hindurch von der ersten Ebene S1 in Richtung der dritten Ebene S3. Der weitere Teilabschnitt 32.5 ist durch eine Drehung des Kerbgelenks 34.5 um einen Drehpunkt Q innerhalb der weiteren Ausnehmung 35.5 zumindest um eine parallel zur Y-Richtung bzw. parallel zur Z-Richtung verlaufende Drehachse frei drehbar. Der Drehpunkt Q ist in Figur 5 angedeutet.

Gemäß Figur 3 und 6 umfasst der zweite Hauptabschnitt 36 den Teilabschnitten 42.1 bis 42.4 der zweiten Gruppe zugeordnete zweite Ausnehmungen 45.1 bis 45.4. Die zweiten Ausnehmungen 45.1 bis 45.4 erstrecken sich in Längsrichtung X durch den zweiten Hauptabschnitt 36 hindurch von der zweiten Ebene S2 bis zur vierten Ebene S4. In Figur 6 ist insbesondere die dem Teilabschnitt 42.1 zugeordnete Ausnehmung 45.1 gut sichtbar. Die Teilabschnitte 42.1 bis 42.4 der zweiten Gruppe sind durch eine Biegung der zweiten Verbindungsabschnitte 44.1 bis 44.4 in Längsrichtung X innerhalb der zweiten Ausnehmungen 45.1 bis 45.4 in Längsrichtung X frei bewegbar. Dadurch wird erreicht, dass die Rotationsfreiheitsgrade RY und RZ des dem zweiten Befestigungselement 24 zugewandten Endes des balkenförmigen Trägers 12 nicht gesperrt sind.

Insbesondere sind die zweiten Verbindungsabschnitte 44.1 bis 44.4 derart ausgebildet, dass sie eine Bewegung zwischen dem zweiten Hauptabschnitt 36 und den Teilabschnitten 42.1 bis 42.4 der zweiten Gruppe in Längsrichtung X zulassen.

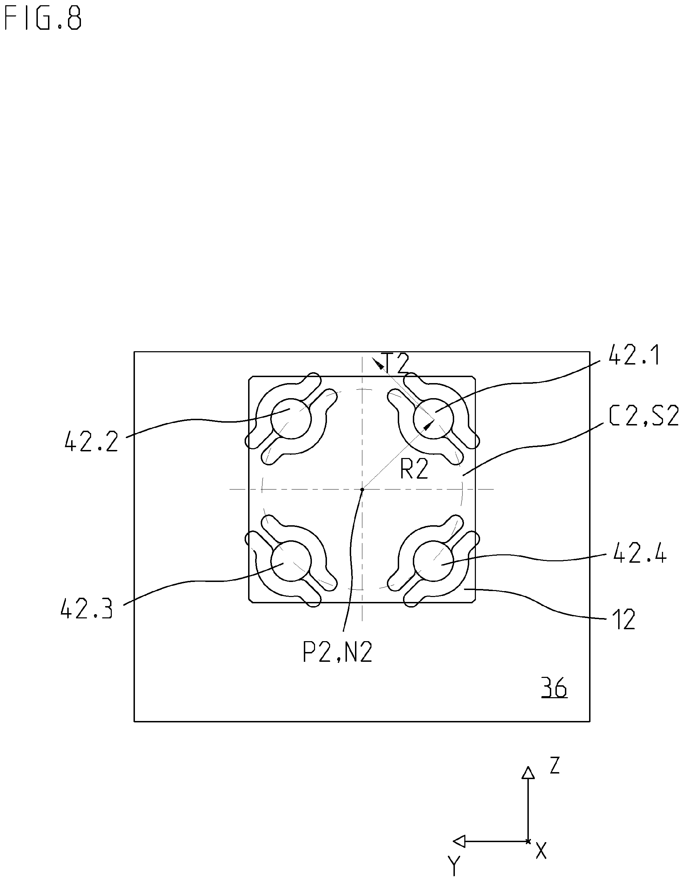

In den Figuren 7 bis 10 sind schematische Darstellungen zur Veranschaulichung verschiedener Relativanordnungen zwischen der jeweiligen Gruppe von Teilabschnitten 32.1 bis 32.4, 42.1 bis 42.4 des ersten bzw. zweiten Befestigungselements 22, 24 und dem balkenförmigen Träger 12 gezeigt. Bezugnehmend auf Figur 7 sind der erste Mittelpunkt P1 und ein erster Schwerpunkt N1 einer Querschnittsfläche des dem ersten Befestigungselement 22 zugewandten Endes des balkenförmigen Trägers 12 (z.B. Schwerpunkt, der mit der neutralen Faser zusammenfällt) in einer Blickrichtung senkrecht zur ersten Ebene S1 deckungsgleich positioniert. Bezugnehmend auf Figur 8 sind der zweite Mittelpunkt P2 und ein zweiter Schwerpunkt N2 einer Querschnittsfläche des dem zweiten Befestigungselement 24 zugewandten Endes des balkenförmigen Trägers 12 (z.B. Schwerpunkt, der mit der neutralen Faser zusammenfällt) in einer Blickrichtung senkrecht zur zweiten Ebene S2 deckungsgleich positioniert. Die Relativanordnung nach Figur 7 und 8 stellt eine bezüglich des Schwerpunkts N1, N2 symmetrische Anordnung dar. Diese symmetrische Anordnung ist bevorzugt.

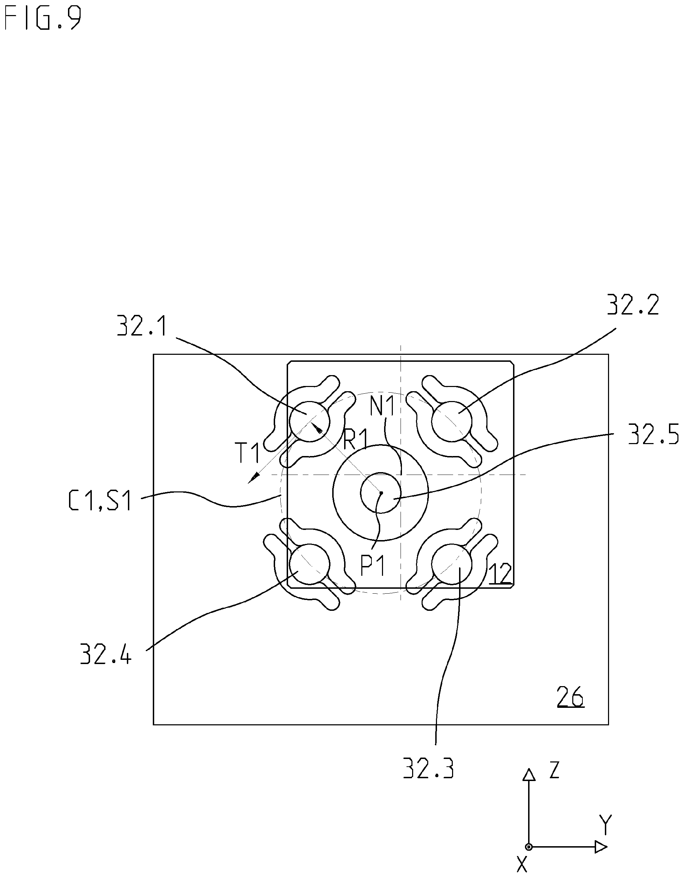

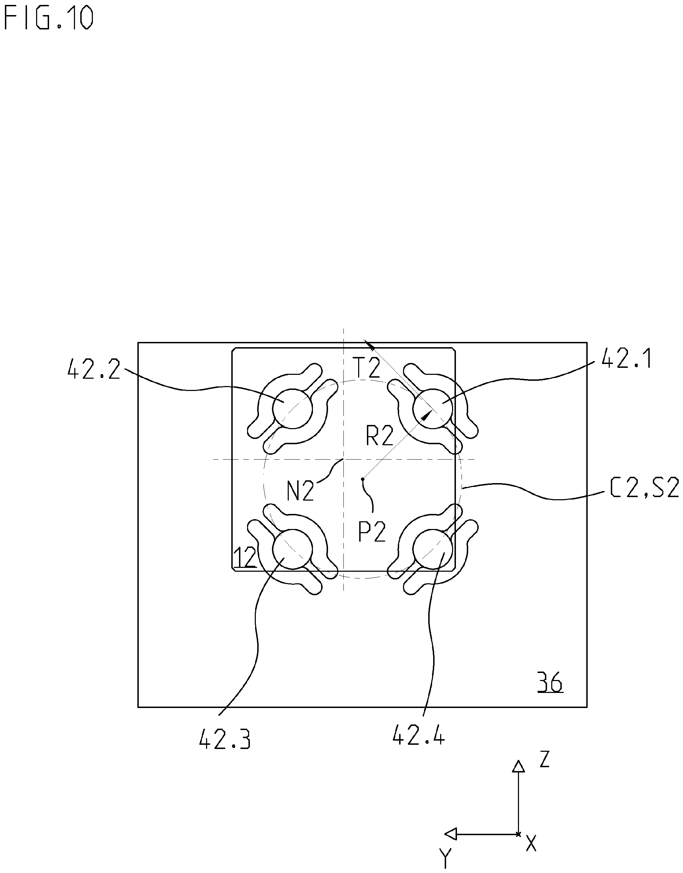

Die Relativanordnung nach Figur 9 und 10 unterscheidet sich von der Relativanordnung nach Figur 7 und 8 dadurch, dass der erste Schwerpunkt N1 und der erste gemeinsame Punkt P1 in Blickrichtung senkrecht zur ersten Ebene S1 beabstandet voneinander positioniert sind (vgl. Figur 9) und dass der zweite Schwerpunkt N2 und der zweite gemeinsame Punkt P2 in Blickrichtung senkrecht zur zweiten Ebene S2 beabstandet voneinander positioniert sind (vgl. Figur 10). Die Relativanordnung nach Figur 9 und 10 stellt eine bezüglich des Schwerpunkts N1, N2 nichtsymmetrische Anordnung dar und ist alternativ einsetzbar.

In Bezug auf Figur 7 und 8 (bzw. Figur 9 und 10) bilden die Teilabschnitte 32.1 bis 32.4, 42.1 bis 42.4 der ersten und zweiten Gruppe jeweils eine bezüglich des ersten bzw. zweiten Mittelpunkts P1, P2 symmetrische Anordnung. Die Teilabschnitte 32.1 bis 32.4 der ersten Gruppe und die Teilabschnitte 42.1 bis 42.4 der zweiten Gruppe umfassen jeweils vier Teilabschnitte, die in einem gleichen Winkelabstand (z.B. ϕ = π/2) zueinander angeordnet sind. Die Teilabschnitte 32.1 bis 32.4 der ersten Gruppe haben in radialer Richtung R1 einen gleichen Abstand vom ersten Mittelpunkt P1 (vgl. Figur 7 bzw. 9). Die Teilabschnitte 42.1 bis 42.4 der zweiten Gruppe haben in radialer Richtung R2 einen gleichen Abstand vom zweiten Mittelpunkt P2 (vgl. Figur 8 bzw. 10).

Durch diese symmetrische Anordnung wird eine über den Umfang gleichverteilte, d.h. für jeden Winkel gleiche Steifigkeit in radialer Richtung R1, R2 bewirkt. Diese symmetrische Anordnung bewirkt zudem eine über die Breite und Höhe gleiche Quersteifigkeit, d.h. Steifigkeit in Y- bzw. Z-Richtung.

Durch die erfindungsgemäße Anordnung 10 wird erreicht, dass die Rotationssteifigkeit RX im Vergleich zur Rotationssteifigkeit RY bzw. RZ sowohl auf Festlager- als auch auf Loslagerseite relativ groß ist. Des Weiteren wird eine relativ hohe Quersteifigkeit, d.h. Steifigkeit in Y- bzw. Z-Richtung, erreicht. Dies ermöglicht einerseits hohe Eigenfrequenzen und andererseits eine gute Entkopplung.

Die ersten und zweiten Verbindungsabschnitte 34.1 bis 34.4, 44.1 bis 44.4 sind in vorteilhafter Weise als Festkörpergelenke, insbesondere Blattfedergelenke, oder biegbare Drähte ausgebildet.

Die Erfindung ist nicht auf das lichtelektrische Abtastprinzip beschränkt. Die Messteilungen 16 können insbesondere auch magnetisch oder induktiv abtastbar ausgebildet sein.

## Patentansprüche

1. Anordnung (10) zum endseitigen Befestigen eines sich in einer Längsrichtung (X) erstreckenden Trägers (12) mit einer Messteilung (16.1) zur Positionsmessung zumindest in Längsrichtung (X) an einer Anbaufläche (18) eines Grundkörpers (20),
wobei die Anordnung (10) ein erstes Befestigungselement (22) und ein zweites Befestigungselement (24) aufweist, wobei das erste Befestigungselement (22) und das zweite Befestigungselement (24) auf in Längsrichtung (X) gegenüberliegenden Seiten des Trägers (12) positionierbar sind, und wobei das erste Befestigungselement (22) und das zweite Befestigungselement (24) derart ausgebildet sind, dass der Träger (12) an seinen Enden von dem ersten Befestigungselement (22) und dem zweiten Befestigungselement (24) seitlich kontaktierbar ist,
wobei das erste Befestigungselement (22) derart ausgebildet ist, dass der Träger (12) an seinem dem ersten Befestigungselement (22) zugewandten Ende in Längsrichtung (X) starr gegenüber dem Grundkörper (20) getragen werden kann, und wobei das zweite Befestigungselement (24) derart ausgebildet ist, dass der Träger (12) an seinem dem zweiten Befestigungselement (24) zugewandten Ende in Längsrichtung (X) frei beweglich gegenüber dem Grundkörper (20) getragen werden kann,
**dadurch gekennzeichnet, dass** das erste Befestigungselement (22) einen ersten Hauptabschnitt (26), der mit dem Grundkörper (20) starr verbindbar ist, und eine erste Gruppe von Teilabschnitten (32.1 bis 32.4), die mit dem Träger (12) starr verbindbar sind, aufweist, wobei sich der erste Hauptabschnitt (26) zumindest teilweise in einer ersten Ebene (S1) quer zur Längsrichtung (X) erstreckt, und wobei die Teilabschnitte (32.1 bis 32.4) der ersten Gruppe entlang eines in der ersten Ebene (S1) liegenden kreisförmigen Umfangs (C1) um einen ersten Mittelpunkt (P1) herum verteilt angeordnet sind,
wobei zwischen dem ersten Hauptabschnitt (26) und den Teilabschnitten (32.1 bis 32.4) der ersten Gruppe jeweils erste Verbindungsabschnitte (34.1 bis 34.4) angeordnet sind, wobei die ersten Verbindungsabschnitte (34.1 bis 34.4) derart ausgebildet sind, dass sie eine Bewegung zwischen dem ersten Hauptabschnitt (26) und den Teilabschnitten (32.1 bis 32.4) der ersten Gruppe in einer radialen Richtung (R1) bezogen auf den ersten Mittelpunkt (P1) zulassen, aber keine Bewegung zwischen dem ersten Hauptabschnitt (26) und den Teilabschnitten (32.1 bis 32.4) der ersten Gruppe in einer Umfangsrichtung (T1) bezogen auf den ersten Mittelpunkt (P1) zulassen,
wobei das erste Befestigungselement (22) zusätzlich zu der ersten Gruppe von Teilabschnitten (32.1 bis 32.4) einen weiteren Teilabschnitt (32.5), der mit dem Träger (12) starr verbindbar ist, aufweist, wobei der weitere Teilabschnitt (32.5) in der ersten Ebene (S1) im ersten Mittelpunkt (P1) angeordnet ist, und wobei der erste Hauptabschnitt (26) und derweitere Teilabschnitt (32.5) über ein Verbindungsmittel (34.5) derart miteinander verbunden sind, dass eine Bewegung zwischen dem ersten Hauptabschnitt (26) und dem weiteren Teilabschnitt (32.5) in Längsrichtung (X) verhindert wird, und
dass das zweite Befestigungselement (24) einen zweiten Hauptabschnitt (36), der mit dem Grundkörper (20) starr verbindbar ist, und eine zweite Gruppe von Teilabschnitten (42.1 bis 42.4), die mit dem Träger (12) starr verbindbar sind, aufweist, wobei sich der zweite Hauptabschnitt (36) zumindest teilweise in einer zweiten Ebene (S2) quer zur Längsrichtung (X) erstreckt, und wobei die Teilabschnitte (42.1 bis 42.4) der zweiten Gruppe entlang eines in der zweiten Ebene (S2) liegenden kreisförmigen Umfangs (C2) um einen zweiten Mittelpunkt (P2) herum verteilt angeordnet sind,
wobei zwischen dem zweiten Hauptabschnitt (36) und den Teilabschnitten (42.1 bis 42.4) der zweiten Gruppe jeweils zweite Verbindungsabschnitte (44.1 bis 44.4) angeordnet sind, wobei die zweiten Verbindungsabschnitte (44.1 bis 44.4) derart ausgebildet sind, dass sie eine Bewegung zwischen dem zweiten Hauptabschnitt (36) und den Teilabschnitten (42.1 bis 42.4) der zweiten Gruppe in radialer Richtung (R2) bezogen auf den zweiten Mittelpunkt (P2) zulassen, aber keine Bewegung zwischen dem zweiten Hauptabschnitt (36) und den Teilabschnitten (42.1 bis 42.4) der zweiten Gruppe in Umfangsrichtung (T2) bezogen auf den zweiten Mittelpunkt (P2) zulassen,
wobei die erste Ebene (S1) und die zweite Ebene (S2) diejenigen Ebenen sind, die an den Enden des Trägers (12) anbringbar sind,
wobei die ersten Verbindungsabschnitte (34.1 bis 34.4) derart ausgebildet sind, dass sie eine Bewegung zwischen dem ersten Hauptabschnitt (26) und den Teilabschnitten (32.1 bis 32.4) der ersten Gruppe in Längsrichtung (X) zulassen, und wobei die zweiten Verbindungsabschnitte (44.1 bis 44.4) derart ausgebildet sind, dass sie eine Bewegung zwischen dem zweiten Hauptabschnitt (36) und den Teilabschnitten (42.1 bis 42.4) der zweiten Gruppe in Längsrichtung (X) zulassen.

2. Anordnung (10) nach Anspruch 1, wobei sich die Teilabschnitte (32.1 bis 32.4) der ersten Gruppe parallel zur ersten Ebene (S1) erstrecken, und wobei sich die Teilabschnitte (42.1 bis 42.4) der zweiten Gruppe parallel zur zweiten Ebene (S2) erstrecken.

3. Anordnung (10) nach Anspruch 1 oder 2, wobei die Teilabschnitte (32.1 bis 32.4) der ersten Gruppe und die Teilabschnitte (42.1 bis 42.4) der zweiten Gruppe jeweils scheibenförmig ausgebildet sind.

4. Anordnung (10) nach einem der vorhergehenden Ansprüche, wobei die Teilabschnitte (32.1 bis 32.4) der ersten Gruppe erste Oberflächen zum Aufbringen eines Klebstoffs zur stoffschlüssigen Verbindung des dem ersten Befestigungselement (22) zugewandten Endes des Trägers (12) mit den Teilabschnitten (32.1 bis 32.4) der ersten Gruppe aufweisen, und wobei die Teilabschnitte (42.1 bis 42.4) der zweiten Gruppe zweite Oberflächen zum Aufbringen eines Klebstoffs zur stoffschlüssigen Verbindung des dem zweiten Befestigungselement (24) zugewandten Endes des Trägers (12) mit den Teilabschnitten (42.1 bis 42.4) der zweiten Gruppe aufweisen.

5. Anordnung (10) nach einem der vorhergehenden Ansprüche, wobei die Teilabschnitte (32.1 bis 32.4) der ersten Gruppe und die Teilabschnitte (42.1 bis 42.4) der zweiten Gruppe jeweils mindestens drei Teilabschnitte umfassen.

6. Anordnung (10) nach einem der vorhergehenden Ansprüche, wobei die Teilabschnitte (32.1 bis 32.4) der ersten Gruppe und die Teilabschnitte (42.1 bis 42.4) der zweiten Gruppe jeweils in einem gleichen Winkelabstand zueinander angeordnet sind.

7. Anordnung (10) nach einem der vorhergehenden Ansprüche, wobei die Teilabschnitte (32.1 bis 32.4) der ersten Gruppe in radialer Richtung (R1) einen gleichen Abstand vom ersten Mittelpunkt (P1) haben, und wobei die Teilabschnitte (42.1 bis 42.4) der zweiten Gruppe in radialer Richtung (R2) einen gleichen Abstand vom zweiten Mittelpunkt (P2) haben.

8. Anordnung (10) nach einem der vorhergehenden Ansprüche, wobei sich die ersten Verbindungsabschnitte (34.1 bis 34.4) parallel zur ersten Ebene (S1) erstrecken, und wobei sich die zweiten Verbindungsabschnitte (44.1 bis 44.4) parallel zur zweiten Ebene (S2) erstrecken.

9. Anordnung (10) nach einem der vorhergehenden Ansprüche, wobei die ersten Verbindungsabschnitte (34.1 bis 34.4) und die zweiten Verbindungsabschnitte (44.1 bis 44.4) jeweils stegförmig ausgebildet sind, wobei die ersten Verbindungsabschnitte (34.1 bis 34.4) jeweils ausgehend von den Teilabschnitten (32.1 bis 32.4) der ersten Gruppe in Umfangsrichtung (T1) zum ersten Hauptabschnitt (26) hin verlaufen, und wobei die zweiten Verbindungsabschnitte (44.1 bis 44.4) jeweils ausgehend von den Teilabschnitten (42.1 bis 42.4) der zweiten Gruppe in Umfangsrichtung (T2) zum zweiten Hauptabschnitt (36) hin verlaufen.

10. Anordnung (10) nach einem der vorhergehenden Ansprüche, wobei die ersten Verbindungsabschnitte (34.1 bis 34.4) erste Festkörpergelenke bilden, über die der erste Hauptabschnitt (26) und die Teilabschnitte (32.1 bis 32.4) der ersten Gruppe miteinander verbunden sind, und wobei die zweiten Verbindungsabschnitte (44.1 bis 44.4) zweite Festkörpergelenke bilden, über die der zweite Hauptabschnitt (36) und die Teilabschnitte (42.1 bis 42.4) der zweiten Gruppe miteinander verbunden sind.

11. Anordnung (10) nach Anspruch 10, wobei die ersten Festkörpergelenke (34.1 bis 34.4) und die zweiten Festkörpergelenke (44.1 bis 44.4) jeweils Blattfedergelenke sind.

12. Anordnung (10) nach einem der vorhergehenden Ansprüche, wobei das Verbindungsmittel (34.5) ein Festkörpergelenk, insbesondere ein Kerbgelenk, ist.

13. Baueinheit mit einer Anordnung (10) nach einem der vorhergehenden Ansprüche und einem Träger (12), wobei der Träger (12) eine Messteilung (16.1) zur Positionsmessung zumindest in Längsrichtung (X) aufweist.

14. Baueinheit nach Anspruch 13, wobei der Träger (12) mindestens einen Maßstab (14.1) aufweist, wobei sich der Maßstab (14.1) in Längsrichtung (X) erstreckt, und wobei der Maßstab (14.1) als Zwischenträger der Messteilung (16.1) ausgebildet ist.

## Claims

1. Assembly (10) for fixing an end of a support (12) extending in a longitudinal direction (X) with a measurement graduation (16.1) for position measurement at least in a longitudinal direction (X) on an attachment face (18) of a carrier (20),
wherein the assembly (10) has a first fixing element (22) and a second fixing element (24), wherein the first fixing element (22) and the second fixing element (24) can be positioned on sides of the support (12) that are opposite in the longitudinal direction (X), and wherein the first fixing element (22) and the second fixing element (24) are formed in such a way that the support (12) can be contacted laterally at its ends by the first fixing element (22) and the second fixing element (24),
wherein the first fixing element (22) is formed in such a way that the support (12) can be supported rigidly with respect to the carrier (20) in the longitudinal direction (X) at its end facing the first fixing element (22), and wherein the second fixing element (24) is formed in such a way that the support (12) can be supported freely movably with respect to the carrier (20) at its end facing the second fixing element (24),
**characterized in that** the first fixing element (22) has a first main section (26), which can be connected rigidly to the carrier (20), and a first group of subsections (32.1 to 32.4), which can be connected rigidly to the support (12), wherein the first main section (26) extends at least partly in a first plane (S1) transverse to the longitudinal direction (X), and wherein the subsections (32.1 to 32.4) of the first group are arranged along a circular circumference (C1) lying in the first plane (S1), distributed around a first centre point (P1),
wherein respective first connecting sections (34.1 to 34.4) are arranged between the first main section (26) and the subsections (32.1 to 32.4) of the first group, wherein the first connecting sections (34.1 to 34.4) are formed in such a way that they permit movement between the first main section (26) and the subsections (32.1 to 32.4) of the first group in a radial direction (R1) relative to the first centre point (P1) but do not permit movement between the first main section (26) and the subsections (32.1 to 32.4) of the first group in a circumferential direction (T1) relative to the first centre point (P1),
wherein, in addition to the first group of subsections (32.1 to 32.4), the first fixing element (22) has a further subsection (32.5), which can be connected rigidly to the support (12), wherein the further subsection (32.5) is arranged in the first plane (S1) at the first centre point (P1), and wherein the first main section (26) and the further subsection (32.5) can be connected to each other via a connecting means (34.5) in such a way that a movement between the first main section (26) and the further subsection (32.5) in the longitudinal direction (X) is prevented, and
**in that** the second fixing element (24) has a second main section (36), which can be connected rigidly to the carrier (20), and a second group of subsections (42.1 to 42.4), which can be connected rigidly to the support (12), wherein the second main section (36) extends at least partly in a second plane (S2) transverse to the longitudinal direction (X), and wherein the subsections (42.1 to 42.4) of the second group are arranged along a circular circumference (C2) lying in the second plane (S2), distributed about a second centre point (P2),
wherein respective second connecting sections (44.1 to 44.4) are arranged between the second main section (36) and the subsections (42.1 to 42.4) of the second group, wherein the second connecting sections (44.1 to 44.4) are formed in such a way that they permit movement between the second main section (36) and the subsections (42.1 to 42.4) of the second group in the radial direction (R2) relative to the second centre point (P2) but do not permit movement between the second main section (36) and the subsections (42.1 to 42.4) of the second group in the circumferential direction (T2) relative to the second centre point (P2),
wherein the first plane (S1) and the second plane (S2) are those planes which can be attached to the ends of the support (12),
wherein the first connecting sections (34.1 to 34.4) are formed in such a way that they permit movement between the first main section (26) and the subsections (32.1 to 32.4) of the first group in the longitudinal direction (X), and wherein the second connecting sections (44.1 to 44.4) are formed in such a way that they permit movement between the second main section (36) and the subsections (42.1 to 42.4) of the second group in the longitudinal direction (X).

2. Assembly (10) according to Claim 1, wherein the subsections (32.1 to 32.4) of the first group extend parallel to the first plane (S1), and wherein the subsections (42.1 to 42.4) of the second group extend parallel to the second plane (S2).

3. Assembly (10) according to Claim 1 or 2, wherein the subsections (32.1 to 32.4) of the first group and the subsections (42.1 to 42.4) of the second group are each disc-shaped.

4. Assembly (10) according to one of the preceding claims, wherein the subsections (32.1 to 32.4) of the first group have first surfaces for the application of an adhesive for the integral connection of the end of the support (12) that faces the first fixing element (22) to the subsections (32.1 to 32.4) of the first group, and wherein the subsections (42.1 to 42.4) of the second group have second surfaces for the application of an adhesive for the integral connection of the end of the support (12) that faces the second fixing element (24) to the subsections (42.1 to 42.4) of the second group.

5. Assembly (10) according to one of the preceding claims, wherein the subsections (32.1 to 32.4) of the first group and the subsections (42.1 to 42.4) of the second group each comprise at least three subsections.

6. Assembly (10) according to one of the preceding claims, wherein the subsections (32.1 to 32.4) of the first group and the subsections (42.1 to 42.4) of the second group are each arranged at an equal angular spacing from one another.

7. Assembly (10) according to one of the preceding claims, wherein the subsections (32.1 to 32.4) of the first group have the same spacing from the first centre point (P1) in the radial direction (R1), and wherein the subsections (42.1 to 42.4) of the second group have the same spacing from the second centre point (P2) in the radial direction (R2).

8. Assembly (10) according to one of the preceding claims, wherein the first connecting sections (34.1 to 34.4) extend parallel to the first plane (S1), and wherein the second connecting sections (44.1 to 44.4) extend parallel to the second plane (S2).

9. Assembly (10) according to one of the preceding claims, wherein the first connecting sections (34.1 to 34.4) and the second connecting sections (44.1 to 44.4) are each web-shaped, wherein the first connecting sections (34.1 to 34.4), each starting from the subsections (32.1 to 32.4) of the first group, extend in the circumferential direction (T1) towards the first main section (26), and wherein the second connecting sections (44.1 to 44.4), each starting from the subsections (42.1 to 42.4) of the second group, extend in the circumferential direction (T2) towards the second main section (36).

10. Assembly (10) according to one of the preceding claims, wherein the first connecting sections (34.1 to 34.4) form first solid-body joints, via which the first main section (26) and the subsections (32.1 to 32.4) of the first group are connected to one another, and wherein the second connecting sections (44.1 to 44.4) form second solid-body joints, via which the second main section (36) and the subsections (42.1 to 42.4) of the second group are connected to one another.

11. Assembly (10) according to Claim 10, wherein the first solid-body joints (34.1 to 34.4) and the second solid-body joints (44.1 to 44.41) are each leaf-spring joints.

12. Assembly (10) according to one of the preceding claims, wherein the connecting means (34.5) is a solid-body joint, in particular a notch joint.

13. Module having an arrangement (10) according to one of the preceding claims and a support (12), wherein the support (12) has a measurement graduation (16.1) for position measurement at least in the longitudinal direction (X).

14. Module according to Claim 13, wherein the support (12) has at least one scale (14.1), wherein the scale (14.1) extends in the longitudinal direction (X), and wherein the scale (14.1) is formed as an intermediate support of the measurement graduation (16.1).

## Revendications

1. Agencement (10) pour la fixation aux extrémités d'un support (12) s'étendant dans une direction longitudinale (X), comprenant une graduation de mesure (16.1) pour la mesure de position, au moins dans la direction longitudinale (X), d'un corps de base (20) sur une surface de construction (18), l'agencement (10) présentant un premier élément de fixation (22) et un deuxième élément de fixation (24), le premier élément de fixation (22) et le deuxième élément de fixation (24) pouvant être positionnés sur des côtés du support (12) opposés dans la direction longitudinale (X), et le premier élément de fixation (22) et le deuxième élément de fixation (24) étant réalisés de telle sorte que le premier élément de fixation (22) et le deuxième élément de fixation (24) puissent venir en contact avec le support (12), au niveau de ses extrémités, le premier élément de fixation (22) étant réalisé de telle sorte que le support (12), au niveau de son extrémité tournée vers le premier élément de fixation (22), dans la direction longitudinale (X), puisse être supporté rigidement par rapport au corps de base (20), et le deuxième élément de fixation (24) étant réalisé de telle sorte que le support (12), au niveau de son extrémité tournée vers le deuxième élément de fixation (24), dans la direction longitudinale (X), puisse être supporté de manière librement déplaçable par rapport au corps de base (20),
**caractérisé en ce que** le premier élément de fixation (22) présente une première portion principale (26) qui peut être connectée rigidement au corps de base (20) et un premier groupe de portions partielles (32.1 à 32.4), qui peuvent être connectées rigidement au support (12), la première portion principale (26) s'étendant au moins en partie dans un premier plan (S1) transversalement à la direction longitudinale (X), et les portions partielles (32.1 à 32.4) du premier groupe étant disposées de manière répartie autour d'un premier centre (P1) le long d'une périphérie (C1) de forme circulaire située dans le premier plan (S1),
des premières portions de connexion (34.1 à 34.4) étant disposées à chaque fois entre la première portion principale (26) et les portions partielles (32.1 à 32.4) du premier groupe, les premières portions de connexion (34.1 à 34.4) étant réalisées de manière à permettre un déplacement entre la première portion principale (26) et les portions partielles (32.1 à 32.4) du premier groupe dans une direction radiale (R1) par rapport au premier centre (P1) mais à ne pas permettre un déplacement entre la première portion principale (26) et les portions partielles (32.1 à 32.4) du premier groupe dans une direction périphérique (T1) par rapport au premier centre (P1),
le premier élément de fixation (22) présentant, en plus du premier groupe de portions partielles (32.1 à 32.4), une portion partielle supplémentaire (32.5), qui peut être connectée rigidement au support (12), la portion partielle supplémentaire (32.5) étant disposée dans le premier plan (S1) dans le premier centre (P1), et la première portion principale (26) et la portion partielle supplémentaire (32.5) étant connectées l'une à l'autre par le biais d'un moyen de connexion (34.5) de telle sorte qu'un déplacement entre la première portion principale (26) et la portion partielle supplémentaire (32.5) dans la direction longitudinale (X) soit empêché, et
**en ce que** le deuxième élément de fixation (24) présente une deuxième portion principale (36) qui peut être connectée rigidement au corps de base (20) et un deuxième groupe de portions partielles (42.1 à 42.4) qui peuvent être connectées rigidement au support (12), la deuxième portion principale (36) s'étendant au moins en partie dans un deuxième plan (S2) transversalement à la direction longitudinale (X) et les portions partielles (42.1 à 42.4) du deuxième groupe étant disposées de manière répartie autour d'un deuxième centre (P2) le long d'une périphérie circulaire (C2) située dans le deuxième plan (S2),
des deuxièmes portions de connexion (44.1 à 44.4) étant disposées à chaque fois entre la deuxième portion principale (36) et les portions partielles (42.1 à 42.4) du deuxième groupe, les deuxièmes portions de connexion (44.1 à 44.4) étant réalisées de manière à permettre un déplacement entre la deuxième portion principale (36) et les portions partielles (42.1 à 42.4) du deuxième groupe dans la direction radiale (R2) par rapport au deuxième centre (P2), mais à ne pas permettre un déplacement entre la deuxième portion principale (36) et les portions partielles (42.1 à 42.4) du deuxième groupe dans la direction périphérique (T2) par rapport au deuxième centre (P2),
le premier plan (S1) et le deuxième plan (S2) étant les plans qui peuvent être montés au niveau des extrémités du support (12),
les premières portions de connexion (34.1 à 34.4) étant réalisées de manière à permettre un déplacement entre la première portion principale (26) et les portions partielles (32.1 à 32.4) du premier groupe dans la direction longitudinale (X), et les deuxièmes portions de connexion (44.1 à 44.4) étant réalisées de manière à permettre un déplacement entre la deuxième portion principale (36) et les portions partielles (42.1 à 42.4) du deuxième groupe dans la direction longitudinale (X).

2. Agencement (10) selon la revendication 1, dans lequel les portions partielles (32.1 à 32.4) du premier groupe s'étendent parallèlement au premier plan (S1), et les portions partielles (42.1 à 42.4) du deuxième groupe s'étendent parallèlement au deuxième plan (S2).

3. Agencement (10) selon la revendication 1 ou 2, dans lequel les portions partielles (32.1 à 32.4) du premier groupe et les portions partielles (42.1 à 42.4) du deuxième groupe sont à chaque fois réalisée en forme de disque.

4. Agencement (10) selon l'une quelconque des revendications précédentes, dans lequel les portions partielles (32.1 à 32.4) du premier groupe présentent des premières surfaces pour l'application d'un adhésif en vue de la connexion par liaison de matière de l'extrémité du support (12) tournée vers le premier élément de fixation (22) aux portions partielles (32.1 à 32.4) du premier groupe, et dans lequel les portions partielles (42.1 à 42.4) du deuxième groupe présentent des deuxièmes surfaces pour l'application d'un adhésif en vue de la connexion par liaison de matière de l'extrémité du support (12) tournée vers le deuxième élément de fixation (24) aux portions partielles (42.1 à 42.4) du deuxième groupe.

5. Agencement (10) selon l'une quelconque des revendications précédentes, dans lequel les portions partielles (32.1 à 32.4) du premier groupe et les portions partielles (42.1 à 42.4) du deuxième groupe comprennent à chaque fois au moins trois portions partielles.

6. Agencement (10) selon l'une quelconque des revendications précédentes, dans lequel les portions partielles (32.1 à 32.4) du premier groupe et les portions partielles (42.1 à 42.4) du deuxième groupe sont à chaque fois disposées à une distance angulaire identique.

7. Agencement (10) selon l'une quelconque des revendications précédentes, dans lequel les portions partielles (32.1 à 32.4) du premier groupe présentent une distance identique au premier centre (P1) dans la direction radiale (R1) et dans lequel les portions partielles (42.1 à 42.4) du deuxième groupe présentent une distance identique au deuxième centre (P2) dans la direction radiale (R2).

8. Agencement (10) selon l'une quelconque des revendications précédentes, dans lequel les premières portions de connexion (34.1 à 34.4) s'étendent parallèlement au premier plan (S1), et dans lequel les deuxièmes portions de connexion (44.1 à 44.4) s'étendent parallèlement au deuxième plan (S2).

9. Agencement (10) selon l'une quelconque des revendications précédentes, dans lequel les premières portions de connexion (34.1 à 34.4) et les deuxièmes portions de connexion (44.1 à 44.4) sont à chaque fois réalisées en forme de nervures, les premières portions de connexion (34.1 à 34.4) s'étendant à chaque fois à partir des portions partielles (32.1 à 32.4) du premier groupe dans la direction périphérique (T1) vers la première portion principale (26), et les deuxièmes portions de connexion (44.1 à 44.4) s'étendant à chaque fois à partir des portions partielles (42.1 à 42.4) du deuxième groupe dans la direction périphérique (T2) vers la deuxième portion principale (36).

10. Agencement (10) selon l'une quelconque des revendications précédentes, dans lequel les premières portions de connexion (34.1 à 34.4) forment des premières articulations à corps solide par le biais desquelles la première portion principale (26) et les portions partielles (32.1 à 32.4) du premier groupe sont connectées les unes aux autres, et les deuxièmes portions de connexion (44.1 à 44.4) forment des deuxièmes articulations à corps solide par le biais desquelles la deuxième portion principale (36) et les deuxièmes portions partielles (42.1 à 42.4) du deuxième groupe sont connectées les unes aux autres.

11. Agencement (10) selon la revendication 10, dans lequel les premières articulations à corps solide (34.1 à 34.4) et les deuxièmes articulations à corps solide (44.1 à 44.4) sont dans chaque cas des articulations à ressort à lame.

12. Agencement (10) selon l'une quelconque des revendications précédentes, dans lequel le moyen de connexion (34.5) est une articulation à corps solide, en particulier une articulation à encoche.

13. Unité structurelle comprenant un agencement (10) selon l'une quelconque des revendications précédentes et un support (12), le support (12) présentant une graduation de mesure (16.1) pour la mesure de position au moins dans la direction longitudinale (X).

14. Unité structurelle selon la revendication 13, dans laquelle le support (12) présente au moins une échelle de mesure (14.1), l'échelle de mesure (14.1) s'étendant dans la direction longitudinale (X), et l'échelle de mesure (14.1) étant réalisée sous forme de support intermédiaire de la graduation de mesure (16.1).
